Europäisches Patentamt

(19) European Patent Office

Office européen des brevets

(11) Numéro de publication : **0 018 877**
**B1**

(12) # FASCICULE DE BREVET EUROPÉEN

(45) Date de publication du fascicule du brevet :
05.01.83

(51) Int. Cl.³ : **G 06 K   7/08**

(21) Numéro de dépôt : **80400499.2**

(22) Date de dépôt : **15.04.80**

(54) Dispositif de lecture d'information codée portée par un support métallique.

(30) Priorité : **25.04.79 FR 7910533**

(43) Date de publication de la demande :
**12.11.80 Bulletin 80/23**

(45) Mention de la délivrance du brevet :
**05.01.83 Bulletin 83/01**

(84) Etats contractants désignés :
**CH DE GB IT LI**

(56) Documents cités :
**GB A 999 496**
**US A 3 210 527**
**US A 3 564 214**
**US A 4 055 746**

(73) Titulaire : **THOMSON-CSF**
**173, Boulevard Haussmann**
**F-75379 Paris Cedex 08 (FR)**

(72) Inventeur : **Liger, René**
**"THOMSON-CSF"-SCPI - 173, bld Haussmann**
**F-75360 Paris Cedex 08 (FR)**

(74) Mandataire : **Courtellemont, Alain et al**
**THOMSON-CSF SCPI 173, Bld Haussmann**
**F-75379 Paris Cedex 08 (FR)**

Jouve, 18, rue St-Denis, 75001 Paris, France

# Dispositif de lecture d'information codée portée par un support métallique

La présente invention se rapporte à un dispositif de lecture d'information où l'information est portée par des zones discrètes d'un support métallique, comportant n circuits magnétiques d'émission (n entier positif supérieur à 1) entourés chacun par un conducteur d'excitation et disposés d'un côté d'un entrefer plan prévu pour l'introduction du support métallique en vue de sa lecture et n circuits magnétiques de réception respectivement placés en regard des n circuits d'émission, de l'autre côté de l'entrefer et entourés chacun par un conducteur de lecture.

De tels dispositifs sont connus par exemple par le brevet US-A-3 210 527 ; ils servent, en particulier, dans les lecteurs-décodeurs de certaines cartes codées utilisées, par exemple, comme cartes d'identification d'un individu pour permettre à ce dernier d'avoir accès à certains locaux ou pour constituer une carte de crédit.

Ces dispositifs connus sont prévus pour lire des cartes où l'information est codée par tout ou rien au moyen, par exemple, de plaques métalliques percées de trous ; la plaque forme blindage magnétique entre un circuit magnétique d'émission et le circuit magnétique de réception en regard, dans la mesure où, introduite dans l'entrefer, elle n'est pas percée d'un trou dans l'espace séparant ces deux circuits magnétiques.

Dans ces dispositifs connus les circuits d'émission et les circuits de réception sont généralement réalisés sous la forme d'alignements d'aimants, en U ou en double U et les barres verticales de ces circuits sont jointives. Dans ces alignements de circuits magnétiques jointifs existe un couplage magnétique non négligeable entre deux circuits voisins d'un même alignement. Comme les dispositifs de lecture connus fonctionnent par simple détection de trous dans la carte, c'est-à-dire par tout ou rien, ce couplage magnétique entre trous voisins n'est pas gênant. Mais ceci n'est plus vrai si une mesure plus précise doit être faite du signal produit, par un circuit d'émission, dans le conducteur de lecture entourant le circuit de réception en regard et que ce signal ne doit pas être influencé par les circuits d'émission voisins du circuit d'émission considéré ; ceci est le cas pour le dispositif selon la présente invention.

Le but de la présente invention est de proposer un dispositif de lecture capable de mesurer la conductivité électrique de zones discrètes de l'entrefer, à savoir des zones comprises entre un circuit d'émission et le circuit de réception en regard, cette mesure étant destinée à permettre de lire non plus une information par tout ou rien comme un trou ou l'absence de trou dans une carte mais une information représentée, par exemple, par la dimension des trous d'une carte ou l'épaisseur de cette carte.

Dans le dispositif selon l'invention l'inconvénient du couplage magnétique entre circuits magnétiques voisins peut être évité par un positionnement convenable de ces circuits les uns par rapport aux autres.

Selon l'invention un dispositif de lecture du type indiqué au début de cette description est caractérisé en ce qu'il comporte des moyens de mesure, selon un code à au moins trois niveaux, de la conductivité électrique de zones discrètes de l'entrefer et en ce que, à cet effet, l'information est donnée par au moins trois valeurs de conductivité électrique que peuvent présenter les zones discrètes du support métallique, les moyens de mesure mesurent la valeur du signal reçu dans chaque conducteur de lecture et les circuits d'émission, d'une part, les circuits de réception, d'autre part, sont magnétiquement isolés afin qu'un circuit de réception ne soit magnétiquement couplé qu'au circuit d'émission en regard, cet isolement étant obtenu par des circuits magnétiques qui, pour les circuits d'émission d'une part et les circuits de réception d'autre part, sont disposés à des distances suffisantes les uns des autres pour rendre négligeable l'influence des lignes de champ magnétique d'un circuit sur les circuits voisins.

L'invention sera mieux comprise et d'autres caractéristiques apparaîtront à l'aide de la description ci-après et des figures s'y rapportant qui représentent :

les figures 1 à 10 et 12 des schémas partiels de dispositifs de lecture selon l'invention,

la figure 11 le schéma d'un dispositif de lecture selon l'invention.

Dans les différentes figures les éléments semblables sont repérés par les mêmes références.

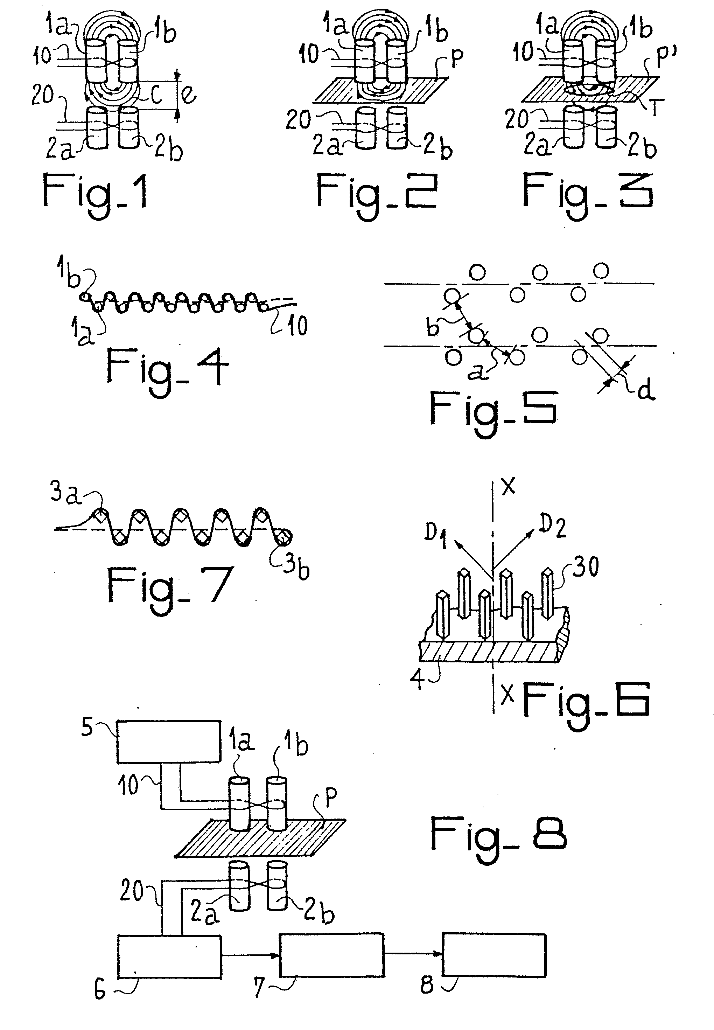

La figure 1 montre un premier dipôle magnétique, $1_a$-$1_b$, constitué de deux bâtonnets de ferrite parallèles, autour duquel est bobiné un conducteur électrique 10. Quand un courant passe dans le conducteur 10 un champ magnétique, C, est produit dont les lignes de force sont représentées sur la figure. Un second dipôle magnétique, $2_a$-$2_b$, semblable au premier, et également associé à un conducteur, 20, est placé en regard du premier dipôle. L'entrefer, e, séparant les deux dipôles est choisi de manière que le champ créé par le premier dipôle soit sensiblement parallèle au plan des pôles du second dipôle ; ceci, du moins, pour un courant donné dans le conducteur 10 et en ce qui concerne la partie de ce champ voisine du second dipôle.

Tel qu'il est ainsi placé le second dipôle capte une partie du champ magnétique produit par le premier dipôle et les variations de ce champ induisent un courant dans le conducteur associé au second dipôle.

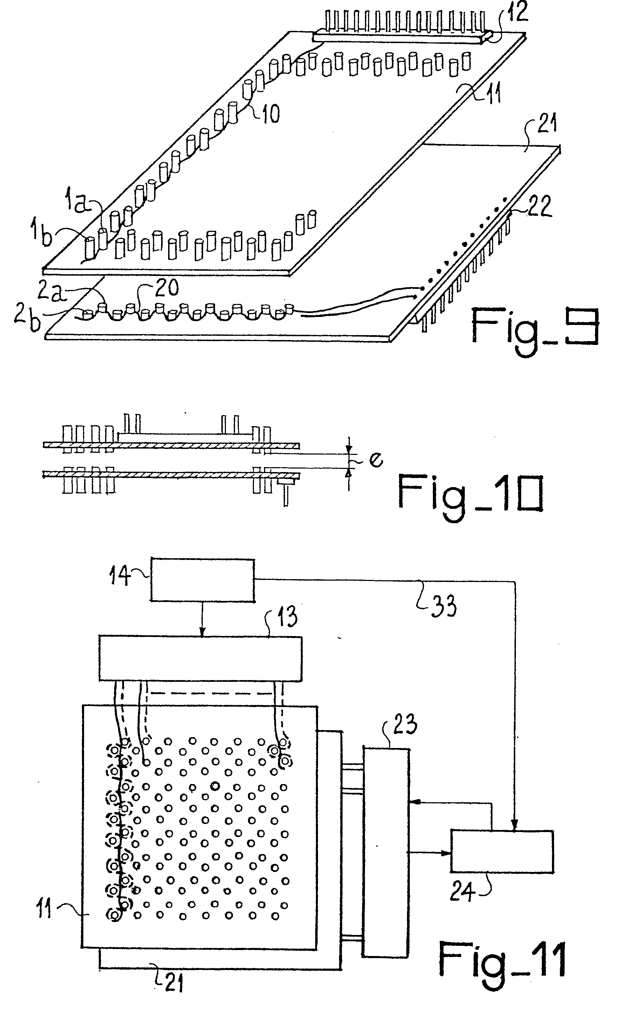

Dans la réalisation qui sera montrée à l'aide des figures 9 et 10 et dans laquelle sont montés des groupements de deux dipôles comme celui selon la figure 1, les dimensions et les valeurs de courants sont les suivantes :

— chacun des deux bâtonnets constituant un dipôle, a une longueur de 9 mm et un diamètre de 2 mm,

— l'entrefer e est de 2 mm,

— le courant d'excitation appliqué dans le conducteur 10 est un courant impulsionnel de 2 ampères d'amplitude et de 2 microsecondes de durée,

— en l'absence d'écran aux ondes magnétiques dans l'entrefer e, il en résulte dans l'enroulement 20 du second dipôle une force électromotrice induite de 8 mV.

Il est à noter que des champs magnétiques parasites, c'est-à-dire autres que le champ magnétique créé par le premier dipôle, sont sans action sur la valeur de la force électromotrice induite dans l'enroulement 2₀, car le champ magnétique agit de la même manière sur les deux bâtonnets du dipôle si bien que ses effets s'annulent.

La figure 2 montre le dispositif selon la figure 1 lorsqu'une feuille métallique conductrice P est introduite dans l'entrefer e. Lorsque la feuille P est d'épaisseur suffisante (50 microns dans le cas du dispositif dont les caractéristiques ont été données plus avant) elle joue le rôle d'écran pour le champ magnétique créé par le premier dipôle si bien qu'aucun courant n'est induit dans le conducteur 20.

La figure 3 montre le dispositif selon la figure 1 lorsqu'une feuille métallique conductrice P', percée d'un trou T est introduite dans l'entrefer de telle sorte que le trou évite que la feuille P' fasse écran magnétique entre les deux dipôles. Le champ magnétique dû au premier dipôle crée par induction une force électromotrice dans le conducteur 20.

Ainsi le dispositif selon la figure 1 permet de lire sur une feuille l'information constituée par un trou (figure 3) ou une absence de trou (figure 2).

La figure 4 montre, vus de dessus, huit dipôles, tels que le dipôle $1_a$-$1_b$, associés à un même conducteur 10, pour réaliser un alignement d'émission d'un dispositif de lecture. Ce dispositif de lecture qui sera décrit plus en détail à l'aide des figures 9 à 12, comporte huit alignements d'émission placées parallèlement les uns aux autres ; les bâtonnets (tels que $1_a$ et $1_b$) de ces alignements traversent de part en part un même circuit imprimé double face, sur les deux faces duquel sont respectivement imprimés le fil « aller » et le fil « retour » des conducteurs tels que 10. Ce dispositif de lecture comporte, en plus des moyens d'émission constitués par le circuit imprimé et les bâtonnets, des moyens de réception identiques aux moyens d'émission ; les circuits imprimés des moyens d'émission et des moyens de réception sont placés parallèlement l'un à l'autre et en regard, mais les alignements des moyens de réception sont orthogonaux à ceux des moyens d'émission. De plus un entrefer plan est laissé entre les bâtonnets des moyens d'émission et les bâtonnets des moyens de réception. Dans cet entrefer peut être glissée une carte constituée d'une feuille métallique sur support plastique ; cette carte est positionnée au moyen de glissières et de butées de telle sorte que les informations qu'elle comporte (trous ou absence de trous placés selon la même disposition que les dipôles des moyens d'émission ou de réception) viennent se placer exactement entre les paires de dipôles destinées à les lire. Dans ce qui suit les alignements des moyens d'émission seront appelés lignes et les alignements des moyens de réception seront appelés colonnes pour faciliter les explications.

La figure 5 est un schéma sur lequel ont été représentés, vus de dessus, des dipôles de deux alignements d'axes respectifs XX et YY. L'expérience montre et le calcul confirme que la disposition des bâtonnets doit, pour obtenir les meilleures conditions de fonctionnement et rendre négligeable l'influence des lignes de champ parasites entre dipôles voisins, être telle que

$$b \geqslant 2_d$$

$$a \geqslant 2_d$$

où d est la distance entre deux bâtonnets d'un même dipôle, a la distance entre deux dipôles voisins d'un même alignement et b la distance la plus faible entre deux dipôles pris respectivement dans deux alignements voisins d'un même moyen d'émission ou de réception. Il est à noter que les dipôles, au lieu d'être réalisés par des paires de bâtonnets peuvent être des dipôles en U ; le champ magnétique est alors refermé dans la partie opposée à l'entrefer si bien qu'alors la disposition des dipôles n'est plus aussi critique qu'avec les bâtonnets (voir description de la figure 5) car il n'y a plus de champ parasite de fuite. Par contre ces dipôles en U ont l'inconvénient d'être d'un coût plus élevé que les dipôles à bâtonnets.

La figure 6 montre une réalisation de dipôles pour dispositif selon l'invention. Les bâtonnets, 30, de section carrée, sont obtenus, à partir d'un bloc parallélépipédique de ferrite, par des fraisages équidistants selon deux directions $D_1$ et $D_2$ faisant respectivement un angle de + 45° et de − 45° avec l'axe XX des lignes ou des colonnes à obtenir. Tous les bâtonnets obtenus sont solidaires d'un même support plan en ferrite, 4, laissé par le fraisage.

Il est à remarquer qu'une ligne d'émission (figure 7 doit alors comporter 2 bâtonnets carrés de plus que le double du nombre de dipôles de la ligne. En effet, du fait des impératifs d'usinage par fraisage, tout bâtonnet carré d'une ligne est équidistant du bâtonnet qui le suit et du bâtonnet qui le précède dans la ligne (sauf bien entendu pour les deux bâtonnets d'extrémité de ligne : $3_a$ et $3_b$), si bien que le champ qui le traverse est créé par les deux bâtonnets excités les plus proches de lui. Les deux bâtonnets supplémentaires $3_a$ et $3_b$ qui peuvent être appelés bâtonnets de garde permettent ainsi que tous les bâtonnets des dipôles (c'est-à-dire les bâtonnets autres que $3_a$ et $3_b$) soient traversés par les mêmes champs. Du côté des moyens de réception par contre ce problème ne se pose pas si bien que les moyens de réception ne seront pas identiques aux moyens d'émission ou que des moyens d'émission comportant 8 lignes de 7 dipôles constitueront des moyens de réception comportant 8 colonnes de 8 dipôles.

Il a été dit à l'occasion de la description de la figure 2 que lorsque la feuille P était d'épaisseur suffisante (50 microns dans le cas de l'exemple) aucune force électromotrice n'était induite dans le conducteur 20. Dans le cas où la feuille P est de plus faible épaisseur ceci n'est plus vrai ; en fait les courants de Foucault qui sont générés dans l'épaisseur de la feuille P sont directement fonction de l'épaisseur de la feuille : plus la feuille est mince et moins ils sont importants et moins ils s'opposent au passage du champ magnétique qui les a produits et plus, ainsi, le signal lu par le dipôle de réception a un niveau élevé. Ceci est mis a profit dans le dispositif selon la figure 8 pour faire une mesure de l'épaisseur d'une feuille métallique P. A cet effet une source d'impulsions de courant 5 envoie, dans un conducteur 10 associé à un dipôle $1_a$-$1_b$, des impulsions de courant. Un conducteur 20, associé à un dipôle $2_a$-$2_b$, est connecté à l'entrée d'un amplificateur de courant 6 dont la sortie est connectée à l'entrée d'un circuit de détection crête, 7 ; un voltmètre, 8, gradué en microns, donne directement l'épaisseur de la feuille P. Un tel dispositif a été réalisé avec le matériel ayant les caractéristiques indiquées à l'occasion de la description de la figure 1 ; ce dispositif qui utilise des impulsions de courant de 2 ampères, d'une durée de 2 microsecondes et se répétant toutes les 16 microsecondes, a permis de mesurer des épaisseurs de feuilles de cuivre avec une précision de 10 % pour des feuilles de moins de 50 microns d'épaisseur. Ainsi avec des dispositifs de lecture à lignes et colonnes du type de celui selon la figure 9 il est possible de lire une feuille métallique où l'information n'est plus seulement constituée de trous ou d'absence de trous dans une feuille métallique conductrice mais de différentes épaisseurs. Pour lire l'information disposée dans l'entrefer à l'intersection d'une ligne et d'une colonne il faut, par exemple, envoyer des impulsions sur la ligne considérée et recueillir le signal lu au moyen d'un amplificateur à gain commutable suivi d'un circuit à seuil. Avec deux valeurs de gain il est possible de lire un code ternaire inscrit dans la feuille métallique, par exemple de la manière suivante :

— valeur 0 : épaisseur supérieure à 35 microns ;

— valeur 1 : épaisseur comprise entre 20 et 35 microns ;

— valeur 2 : épaisseur inférieure à 20 microns.

Pour réaliser la carte codée il est possible de coller entre deux plaques plastiques des petits carrés métalliques d'épaisseur correspondant à l'information à inscrire.

La figure 9, dont il a déjà été fait mention plus avant, est une vue partielle, en perspective, d'un dispositif de lecture. Sur cette vue une partie seulement des bâtonnets constituant les dipôles a été représentée de manière à faire ressortir la constitution d'une ligne des moyens d'émission (avec des bâtonnets tels que $1_a$ et $1_b$) et d'une colonne des moyens de réception (avec des bâtonnets tels que $2_a$ et $2_b$).

Les moyens d'émission comportent une plaquette de circuit imprimé double face, 11, sur laquelle sont fixées huit lignes de huit dipôles et une fiche à seize broches, 12, servant de fiche de raccordement pour les huit conducteurs tels que 10 des huit lignes d'émission. Les conducteurs des lignes sont réalisés sur les deux faces du circuit imprimé.

Les moyens de réception sont identiques aux moyens d'émission ; sur la figure 9 le circuit imprimé et la fiche des moyens de réception portent respectivement les repères 21 et 22.

La figure 10 est une vue partielle de côté du dispositif de lecture de la figure 9. Sur cette vue où n'ont été représentés que quelques bâtonnets, a été indiquée l'épaisseur e de l'entrefer entre les dipôles des moyens d'émission et les dipôles des moyens de réception, cet entrefer est obtenu au moyen de colonnettes, non représentées sur la figure, disposées entre les circuits imprimés des moyens d'émission et des moyens de réception.

La figure 11 est un schéma d'un dispositif de lecture de carte codée. Le circuit imprimé 11, constituant avec ses bâtonnets les moyens d'émission, a été représenté avec tous ses dipôles mais avec seulement une partie de ses conducteurs. Sur le circuit imprimé 11 est branché un circuit de multiplexage ligne, 13, permettant d'envoyer des groupes de huit impulsions de lecture successivement sur les huit lignes des moyens d'émission. Au circuit imprimé 21, constituant les moyens de réception, est connecté un circuit de multiplexage colonne, 23, permettant de brancher successivement l'entrée d'un amplificateur sur les huit colonnes des moyens de réception ; ce branchement se fait en synchronisme avec l'envoi des impulsions de lecture. Un circuit logique d'émission, 14, et un circuit logique de réception, 24, comportant un microordinateur, permettent respectivement la commande des circuits de multiplexage ligne et de multiplexage colonne ; le circuit logique de réception, 24, qui reçoit des signaux de synchronisation du circuit 14 (liaison 33), effectue également le traitement des informations que lui fournit le circuit de multiplexage colonne 23.

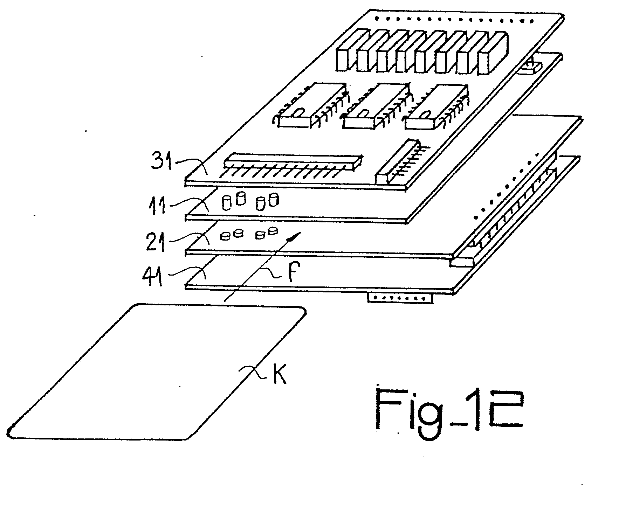

La figure 12 est une vue en perspective montrant le dispositif de lecture déjà décrit à l'aide de la figure 11, ainsi qu'une carte K destinée à être lue par le lecteur-décodeur. Le lecteur-décodeur comporte quatre circuits imprimés 11, 21, 31 et 41. Les circuits imprimés 11 et 21, comme il a été vu précédemment, sont séparés par un entrefer dans lequel sera glissée la carte K pour lecture et décodage (flèche f). Le circuit imprimé 11 est associé au circuit imprimé 31 qui comporte le circuit de multiplexage ligne (13, figure 11) et une partie du circuit logique d'émission (14, figure 11). Le circuit imprimé 21 est associé au circuit imprimé 41 qui comporte le circuit de multiplexage colonne (23, figure 11) et une partie du circuit logique de réception (24, figure 11).

Sur la figure 12, pour simplifier le dessin, une partie seulement des bâtonnets a été dessinée, quant aux moyens mécaniques d'assemblage des cartes ils n'ont pas été représentés.

Il est à remarquer que le dispositif de lecture qui vient d'être décrit permet de lire une carte codée où l'information se présente sous la forme de différentes valeurs que peut prendre la conductivité diélectrique de zones discrètes (localisées entre les dipôles en regard) de l'entrefer ; dans le cas de l'exemple décrit ces différentes valeurs sont obtenues par différentes épaisseurs de la plaque métallique, mais il est également possible d'obtenir ces valeurs différentes de conductivité par d'autres moyens, par exemple par des trous de différentes dimensions.

Il est, de plus, à noter, comme cela a été dit à l'occasion de la description de la figure 5, que le dispositif de lecture ne peut fonctionner de façon satisfaisante que si l'écartement entre les dipôles des moyens d'émission ou de réception est suffisant ; en fait cet écartement est suffisant si deux dipôles voisins sont pratiquement sans influence l'un sur l'autre, ce qui revient à dire qu'il faut qu'ils soient magnétiquement isolés.

**Revendications**

1. Dispositif de lecture d'information où l'information est portée par des zones discrètes d'un support métallique (P), comportant n circuits magnétiques d'émission ($1_a$, $1_b$) (n entier positif supérieur à 1) entourés chacun par un conducteur d'excitation (10) et disposés d'un côté d'un entrefer plan (e) prévu pour l'introduction du support métallique en vue de sa lecture et n circuits magnétiques de réception ($2_a$, $2_b$) respectivement placés en regard des n circuits d'émission, de l'autre côté de l'entrefer et entourés chacun par un conducteur de lecture (20), caractérisé en ce qu'il comporte des moyens de mesure (6, 7, 8), selon un code à au moins trois niveaux, de la conductivité électrique de zones discrètes de l'entrefer et en ce que, à cet effet, l'information est donnée par au moins trois valeurs de conductivité électrique que peuvent présenter les zones discrètes du support métallique, les moyens de mesure (6, 7, 8) mesurent la valeur du signal reçu dans chaque conducteur de lecture (20) et les circuits d'émission ($1_a$, $1_b$), d'une part, les circuits de réception ($2_a$, $2_b$), d'autre part, sont magnétiquement isolés afin qu'un circuit de réception ne soit magnétiquement couplé qu'au circuit d'émission en regard, cet isolement étant obtenu par des circuits magnétiques qui, pour les circuits d'émission d'une part et les circuits de réception d'autre part, sont disposés à des distances suffisantes les uns des autres pour rendre négligeable l'influence des lignes de champ magnétique d'un circuit sur les circuits voisins.

2. Dispositif de lecture selon la revendication 1, caractérisé en ce que les circuits magnétiques ($1_a$, $1_b$, $2_a$, $2_b$) sont des dipôles ouverts, formés de deux bâtonnets parallèles en matière ferro-magnétique et en ce que, pour chaque circuit magnétique, l'écartement (d) entre ses bâtonnets est inférieur ou égal à la moitié de la distance (a, b) qui le sépare des circuits magnétiques d'émission voisins si le circuit magnétique considéré est un circuit d'émission et des circuits magnétiques de réception voisins dans le cas contraire.

3. Dispositif de lecture selon la revendication 1, caractérisé en ce que les conducteurs d'excitation (10) et les conducteurs de lecture (20) sont respectivement portés par deux circuits imprimés (11, 21).

**Claims**

1. Device for reading information, where the information is carried by discrete zones of a metallic support (P), comprising n (n integer, positive and exceeding 1) magnetic, transmitter circuits ($1_a$, $1_b$) each surrounded by an excitation conductor (10) and placed on one side of a plane magnetic gap (e) provided for the introduction of the metallic support for the reading thereof, and n magnetic reception circuits ($2_a$, $2_b$) respectively facing the n transmitter circuits on both sides of the magnetic gap, and each surrounded by a reading conductor (20), characterized in that it comprises measurement means (6, 7, 8) for measuring the electric conductivity of discrete magnetic gap zones in accordance with a code having at least three levels, and in that, to this end, the information is given by at least three values of electric conductivity which may be presented by discrete zones of the metallic support, the measurement means (6, 7, 8) measuring the value of the signal received in each reading conductor (20) and the transmitter circuits ($1_a$, $1_b$) on the one hand and the reception circuits ($2_a$, $2_b$) on the other hand being magnetically insulated to have one reception circuit magnetically coupled only to the facing transmitter circuits, this insulation being obtained by magnetic circuits which, for the transmitter circuits on the one hand and the reception circuits on the other hand, are placed at sufficient distances from each other to render negligible the influence of magnetic field lines of one circuit on the neighboring circuits.

2. Reading device in accordance with claim 1, characterized in that the magnetic circuits ($1_a$, $1_b$, $2_a$, $2_b$) are open dipoles formed of two parallel rods of ferromagnetic material, and in that, for each magnetic circuit, the spacing (d) between its rods in less than or equal to half the distance (a, b) separating the same from neighboring magnetic transmitter circuits if the magnetic circuit under consideration is a transmitter circuit, and from the neighboring magnetic reception circuits in the contrary case.

3. Reading device in accordance with claim 1, characterized in that the excitation conductors (10) and the reading conductors (20) are respectively carried by two printed circuits (11, 21).

### Ansprüche

1. Vorrichtung zum Lesen von Informationen, die durch diskrete Zonen eines metallischen Trägers (P) gebildet sind, mit n (n ganzzahlig positiv und größer als 1) magnetischen Sendekreisen ($1_a$, $1_b$), die jeweils von einem Erregungsleiter (10) umgeben und auf der einen Seite eines ebenen Magnetspaltes (e) angeordnet sind, der zur Einführung des metallischen Trägers zum Auslesen desselben vorgesehen ist, und mit n magnetischen Empfangskreisen ($2_a$, $2_b$), die jeweils gegenüber den n Sendekreisen auf der anderen Seite des Magnetspalts angeordnet und jeweils von einem Leseleiter (20) umgeben sind, dadurch gekennzeichnet, daß sie eine Meßeinrichtung (6, 7, 8) zum Messen der elektrischen Leitfähigkeit von diskreten Zonen des Magnetspaltes gemäß einem Code mit wenigstens drei Pegeln umfaßt und daß zu diesem Zweck die Information durch wenigstens drei Werte der elektrischen Leitfähigkeit gegeben ist, die diskrete Zonen des metallischen Trägers aufweisen können, wobei die Meßeinrichtung (6, 7, 8) den Wert des in jedem Leseleiter (20) empfangenen Signals mißt und die Sendekreise ($1_a$, $1_b$) einerseits sowie die Empfangskreise ($2_a$, $2_b$) andererseits magnetisch isoliert sind, damit ein Empfangskreis nur mit dem sich gegenüber befindenden Sendekreis magnetisch gekoppelt ist, wobei ferner diese Isolierung durch Magnetkreise bewirkt ist, die für die Sendekreise einerseits und die Empfangskreise andererseits in ausreichenden Abständen voneinander angeordnet sind, damit der Einfluß der Magnetfeldlinien eines Kreises auf die benachbarten Kreise vernachlässigbar ist.

2. Lesevorrichtung nach Anspruch 1, dadurch gekennzeichnet, daß die Magnetkreise ($1_a$, $1_b$, $2_a$, $2_b$) offene Dipole sind, die aus zwei parallelen Stäbchen aus ferromagnetischem Material gebildet sind, und daß in jedem Magnetkreis der Abstand (d) zwischen seinen Stäbchen geringer als die oder gleich der Hälfte des Abstandes (a, b) ist, der ihn, wenn der betrachtete Magnetkreis ein Sendekreis ist, von den benachbarten magnetischen Sendekreisen und im anderen Fall von den magnetischen Empfangskreisen trennt.

3. Lesevorrichtung nach Anspruch 1, dadurch gekennzeichnet, daß die Erregungsleiter (10) und die Leseleiter (20) jeweils von einer von zwei gedruckten Schaltungen (11, 21) getragen werden.

0 018 877

Fig_1

Fig_2

Fig_3

Fig_4

Fig_5

Fig_7

Fig_6

Fig_8

0 018 877

Fig_9

Fig_10

Fig_11

2

31

11

21

41

f

K

Fig_12